# EUROPEAN PATENT APPLICATION

(11) **EP 2 489 505 A1**
(43) Date of publication of application: **22.08.2012**
(21) Application number: 12167679.5
(22) Date of filing: 22.10.2008
(51) Int. Cl.: B32B 5/26, C08L 83/04

(54) **Fire resistant flexible ceramic resin blend and composite products formed therefrom**

(30) Priority: 22.10.2007 US 999918 P
(62) Divisional of application: 08841828.0
(71) Applicant: Flexible Ceramics, Inc., Palm Springs, CA 92262 (US)
(72) Inventor: Clarke, William, Merced, CA California 95340 (US)
(74) Representative: Manitz, Finsterwald & Partner GbR

(57) **Abstract**

A fire-resistant composite comprises:
a reinforcement material impregnated with a resin blend comprising a silicone resin in about 100 parts by weight, boron nitride in about 4 to 40 parts by weight, silica in about 3 to 15 parts by weight and boron oxide in about 0.1 to 1.2 parts by weight, that is catalyzed by the boron oxide to form a silicone reaction mass that is polymerized at ambient temperature to form a porous silicone polymer having by an elastic linear chain growth, the silica and boron nitride being added to produce a polymer with elastic properties and, a densification resin blend filing pores in the porous silicone polymer and comprising a dimethyl polymer with phenyl silsesquioxane at about 40 to 70 parts by weight and a methoxy terminated dimethyl polymer with methoxy terminated silsesquioxane and a silanol terminated polymethyl silxoane at about 10 to 60 parts by weight to which about 20 parts by weight of the boron nitride and about 6 parts by weight of the silica are added and mixed.

## Description

### Related Application Data

The present application claims benefit from commonly owned, co-pending United States Application for Provisional Patent, Application No. 60/999,918 filed October 22, 2007. The present application is related to commonly owned co-pending applications, Silicone Resin Composites for High Temperature Durable Elastic Composite Applications and Methods for Fabricating Same, Application No. PCT/US2008/007667 ("Clarke application no. 1"), and "Red Heat" Exhaust System Silicone Composite O-Ring Gaskets and Method for Fabricating Same, Application No. PCT/US2008/007719 ("Clarke application 2no. "), and Internal Combustion (IC) Engine Head Assembly Combustion Chamber Multiple Spark Ignition (MSI) Fuel Savings Device and Methods of Fabrication Thereof, Application No. PCT/US2008/007668 ("Clarke application no. 3"), each incorporated herein by reference

### BACKGROUND OF THE INVENTION

### 1. Field of the Invention

This invention relates to the commercial application of flammable organic polymer matrix composites where fire is of concern to workers and passengers in industry, transportation, military, petroleum, powerhouse and aircraft.

### 2. Description of the Related Art

The current use of flammable organic polymer matrix fiber-reinforced composites in the manufacture of aircraft interiors (e.g., phenolic polymers) and structural applications (e.g., epoxy polymers) limits passenger safety where fire hazard is an important design consideration. In-flight fire is ranked as the fourth highest known contributing cause of fatalities arising from accidents involving commercial jet aircraft (Ref. 1). The Federal Aviation Administration (FAA) believes that if aircraft accident rates continue at a constant rate, then death due to fire will increase at 4% per annum in-line with the growth in air passenger traffic (Ref. 2). This condition becomes even more hazardous with the planned commercial development of multi-tier 600 passenger aircraft.

Prior art in silicone resin development demonstrated ten years ago (Ref. 3) the development of essentially non-burning methyl silicone resin composite materials for use in aircraft cabin interiors. Even in the absence of halogenated or other fire retardants, the fire performance was superior to the phenolic resins currently used in aircraft interiors. Also, the heat release, CO and smoke yield of the developed methyl silicone resins were demonstrated as superior to phenolic resins (Ref.3).

The Beckley patent, US 5,552,466 is specific to teach methods of producing processable resin blends that produce high density silica ceramics in the red heat (600 to 1000°C) zone. The preferred catalyst, z inc hexanoic acid produces a high cross-link density polymer by the Beckley methods of processing that favor the formation of high yield ceramic composites compared the high temperature elastic silicone polymers produced by the Clarke methods of using boron nitride, silica and a preferred boron oxide catalyst. No mention is made of compression-recovery properties common to Clarke related composites.

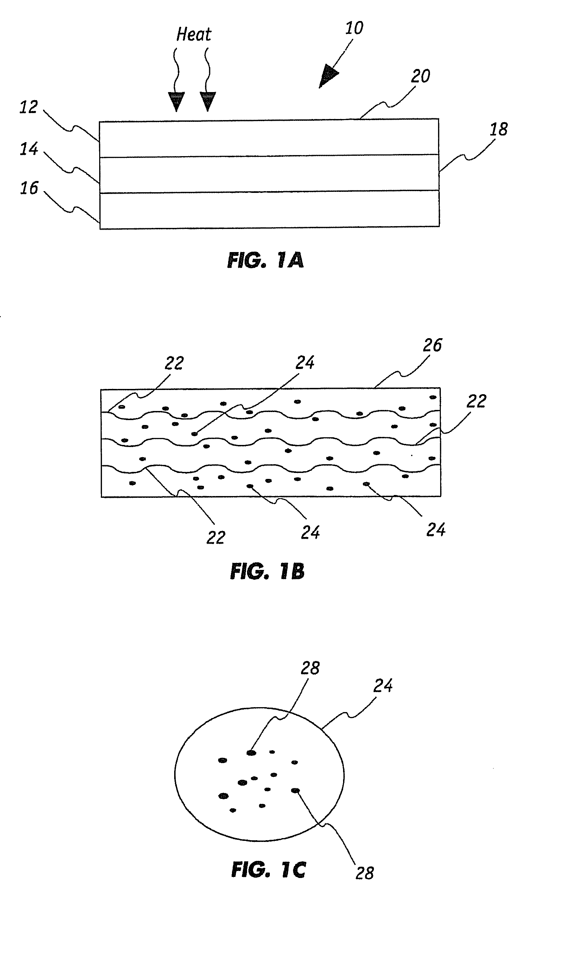

The Chao, Sarmah, Burns and Katsoulis, Non-Burning Silicone Resin Composite Laminates Central R&D, Dow Corning Corporation, Midland MI 48686, 7-14-99 paper refers to silanol-silanol condensation cured methyl silicone resins enabling the fabrication of non-burning composites with lower CO and smoke yields than laminates made with organic laminates. The paper also reveals in Figures 1 to 4 that the methyl silicone resin and composites made therefrom were superior in fire resistant performance to phenolic resin and composites commonly used in aircraft interiors. No mention is made of producing a high temperature elastic methyl and or phenyl silicone resin containing boron nitride, silica and boron oxide to produce an elastic fire resistant silicone laminate that slowly transforms into a flexible ceramic fire barrier then ceramic with 80 to 100% strength retention and instant self extinguishing capability after FAA Fire Penetration testing (FAR 25.853) at 2000°F for 15 minutes with greater endurance capability.

The Boisvert, et al. patent, US 5,972,512 is specific to teach silanol-silanol condensation cured methylsilsesquioxane resins enabling the fabrication of non-burning composites with superior performance than organic laminates. No mention is made of producing a high temperature elastic silicone containing boron nitride, silica and boron oxide to produce an elastic fire protective silicone laminate that slowly transforms into a flexible ceramic then ceramic with no burn through at 2000°F after 15 minutes. Also, the fire resistance is specific to methyl resins overlooking the high thermal advantages of phenyl resins even when used sparingly. Also, elastic composites have dissimilar materials joining advantages not mentioned in the Boisvert patent.

The Clarke patent, US 6,093,763 is specific to teach the use of the zinc hexanoic acid catalyst for a specific ratio of 2:1 for two specific silicon resins with boron nitride as filler. The zinc hexanoic acid catalyst produces a different high cross-link density polymer than the preferred elastic composite produced from a reaction mixture of boron nitride, silica and boron oxide and controlled reaction methods. The amount of zinc catalyst required to enable the sealant to perform is also excessive in comparison to the boron oxide catalyst which is sparingly used to favor a slow reaction for producing elastic composites.

The Clarke patent, US 6,161,520 is specific to teach that the gasket materials derived from Clarke's copending US patent applications Ser. Nos. 08/962,782; 08/962,783 and 09/185,282, all disclose the use of boron nitride as the catalyst for condensation polymerization of the resin blend needed to produce the gaskets. However, boron nitride is *not a catalyst* as incorrectly disclosed therein. The certainty that boron nitride is not a catalyst by attempting to repeat the 873 patent's Figure 1 "gel" curve at 177°C using the preferred CERAC, Inc. item #B-1084- 99.5% pure boron nitride has been otherwise verified. Other research associates have also confirmed the certainty that boron nitride is not a silicone condensation catalyst. Numerous possible contaminates would need to be investigated to find the actual catalyst or combination of catalysts including the possibility of humidity. No mention of using boron nitride, silica and boron oxide as a reaction mixture processed in a rotating cylinder at ambient temperature to favor the production of a high temperature elastic composite. Neither is boron oxide mentioned as catalyst with boron nitride cost advantage addressed when boron oxide is used as a residual from the chemical processing (Ref. 5,6) of boron nitride.

The Clarke patent, US 6,183,873 B1 is specific to teach the use of boron nitride as the catalyst in producing polysiloxane resin formulations for hot melt or wet impregnation of ceramic reinforcements. As stated above, boron nitride is *not a catalyst* as incorrectly claimed. The more costly and toxic hot melt and wet processing methods of the above described '873 patent are eliminated with the superior ambient temperature methods addressed by the inventor. No resin formulations using boron oxide as the catalyst (Table 6 of Clarke application no. 1) are mentioned. Additionally, the methods of producing "flexible ceramic" high temperature elastic laminates are not addressed. Also, the use of laser processing (up to 16,500°C) to increase the tensile strength by 25% and form ceramic sealed edges eliminating the need for costly end closures is not addressed. The boron nitride cost savings in reducing the boron oxide leaching operations in the commercial production of boron nitride and fire resistant advantage of using residual boron oxide contained in boron nitride as a source for the catalyst addition are not mentioned.

The Clarke SAE 2002-01-0332 paper (Ref. 7) refers to high purity boron oxide as a Lewis acid catalyst with silica mentioned as an unobvious inhibitor for these silicone condensation polymerization catalysts. High cost boron nitride and boron oxide are added separately. No mention is made of producing resin formulations using boron nitride containing boron oxide residues as a source of boron oxide catalyst and cost savings advantage. Additionally, the methods of producing "flexible-ceramic" laminates capable of high-temperature elastic recovery (Figure 1 of Clarke application no. 1) are not addressed. Also, the use of laser processing (up to 16,500°C) to increase the tensile strength by up to 25% and forming ceramic sealed edges is not addressed. The "self extinguishing" property of the elastic composite when heat is removed is also not mentioned. This is an essential requirement to prevent combustion pre-ignition in superior fuel saving flexible ceramic composite ignition devices.

### References Cited

U.S. Patent Documents 5,552,466 09/03/1996 Beckley et al.
5,972,512 10/26/1999 Boisvert et al.
6,093,763 07/25/2000 Clarke
6,161,520 12/19/2000 Clarke
6,183,873 02/06/2001 Clarke

### Published References

1.B oeing 2005, Statistical summary of commercial jet airplane accidents - worldwide operations 1959-2004, Seattle, Washington, US, p.18 [This report excludes airplanes manufactured in the Confederation of Independent States - in the former Soviet Union]
2.Federal Aviation Administration (US) website
   <http://www.fire.tc.faa.gov/research/summary.stm> viewed 10 April 2006.
3.C hao, Sarmah, Burns and Katsoulis, Non-Burning Silicone Resin Composite Laminates Central R&D, Dow Corning Corporation, Midland MI 48686, 7-14-99.
4. Mouritz, A.P., Fire Safety of Advance composites for Aircraft, ATSB Research and Analysis Report Aviation Safety Research Grant B2004/0046, April 2006.
5.Len onis, D.A.; Tereshko, J. and C.M. Andersen, Boron Nitride Powder-A High-Performance Alternative for Solid Lubrication, Advanced Ceramics Corporation, A Sterling Publication (1994).
6.T hompson, Raymond, The Chemistry of Metal Borides and Related Compounds, reprinted from PROGRESS IN BORON CHEMISTRY, Vol. 2, Pergamon Press, (1969) p.200.
7.C larke, W.A.; Azzazy, M and West, R., Reinventing the Internal Combustion Engine Head and Exhaust Gaskets, Clarke & Associates, SAE PAPER, 2002-01-0332, (March 4, 2002).
8.T hompson, ibid. pp 212-213.
9.S orenson W.R. and W. T. Campbell, Preparative Methods of Polymer Chemistry, John Wiley & Sons, (1968) p.387.
10. Rochow, E. G., Chemistry of the Silicones, Second Edition, Wiley (1951).

### SUMMARY OF THE INVENTION

### Objectives of the Invention

The objectives of the present invention are to provide superior fire resistant performance composite materials and more cost effective fabrication methods than are currently used in aircraft interior (e.g., phenolic composites) and exterior composites manufacturing (e.g., epoxy composites). Included with the silicone composite materials objectives are methods of increasing the composite materials' light weight, cost savings, flexibility fatigue endurance, post fire composite strength retention and self-extinguishing and corrosion resistance performance capabilities.

It is the further objective of the present invention to enable the resin blend's processing capabilities to significantly reduce processing costs by developing ambient temperature solventless, odorless, essentially nontoxic prepreg processing, also enabling multiplaten press "book stack" laminated parts to be laser cut in multiple stacks in one simple multiple part cost savings operation by discovering a laser cutting heat barrier material, also developing cost efficient impregnation operations by developing rapid thermal quench impregnating systems, and eliminating costly "composite end closure" operations by developing laser cutting formation of ceramic sealed laminate edges, and enabling cost saving efficient silk screening multiple parts operations with raised surface coatings and multiple part identification marking capabilities.

It is the further objective of the present invention to produce liquid caulking sealants that will transform to solid elastic seals retaining hot exhaust gas at sustained 815°C temperatures under sustained 30 psi gas pressures (tested for 4.5 years cab fleet durability under confidentiality agreement).

It is the further objective of the present invention to produce fire resistant fastener silicone adhesives that exceed current fastener and gasket peak temperature (e.g., Loctite's advertised liquid gasket peak temperature of 335°C) and torque retention capabilities. Torque testing of stainless steel bolts fired at 435°C revealed the fire resistant silicone fastener adhesive was superior in torque retention after one hour heat soak essentially performing without smoke in comparison to the heavy smoke generated by the Loctite organic adhesive fired at 435°C.

It is the further objective of the present invention to provide light weight style 108 fabric reinforced silicone composite laminate with optional use of hollow sphere filled silicone coating that will increase the thermal insulation of the composite for passing FAA fire burn through testing at light weight.

It is the further objective of the present invention to exploit the multipurpose advantages of boron oxide throughout all phase transformations of the resin blend from initial condensation polymerization to cured, pyrolyzed and ceramitized composite articles. Where boron oxide initially is used for dehydrating the silanol-silanol condensation reactions as a residual byproduct of commercial boron nitride production (Ref. 5,6). The boron nitride also serves as a source (Ref. 8) for boron oxide when it begins to oxidize in air at about 770°C which is stable at red heat (600 to 1000°C) until the vapor pressure of boron oxide becomes appreciable (Ref. 8) above 1200°C.

It is the further objective of the present invention to design and prepare flexible and resilient composite materials which will perform at 700 °C temperatures, i.e., 400°C higher than those encountered (Ref. 9) in the past while still retaining low temperature elastic sealing advantages. These materials are at the same time "preceramic" capable of producing high yield (>90%) ceramics upon being pyrolyzed to 1000°C.

It is the further objective of the present invention to design and prepare "flexible ceramic" composite laminates from the above elastic composite structures, where "flexible ceramics" are flexible elastic composite structures heat processed in localized regions of the structure to create part ceramic and part flexible elastic "hybrid" composite structures.

This same approach is also achieved in reverse by vacuum filling the less elastic high temperature porous elastic composites (Figure 1, Clarke application no. 1) with the elastic resin blend then heat curing the resin to 177°C followed by an hour post cure at 260°C to assure the formation of a highly elastic resin within the less elastic matrix producing a set of hybrid elastic matrices composites capable (Figure 1, Clarke application no. 1) of making elastic composites with highly durable % recovery of the higher heat cured porous composites.

It is the further objective of the present invention to produce essentially nontoxic, solventless resin blends from silicone condensation polymerization carried out at ambient temperature in equipment designed to allow the polymerization to start in excess acetone (sufficient to dissolve the solid flake or powder silicone resins) while continuously co-mingling the solid additives (boron nitride, silica and boron oxide) within the polymerizing resin reaction mass, thereby producing a thermally stable elastic resin blend for producing high temperature cured elastic silicone composites.

It is the further objective of the present invention to provide a matrix resin densification method (Figure 4, Clarke application no. 1) for filling the porosity produced when the organic material within the polysiloxane resins is pyrolyzed away at temperatures greater than 300°C. High temperature cured composites will typically have porosity from 10 to 20% when pyrolyzed from 300 to 700 °C which provides an opportunity to form hybrid elastic matrices and produce elastic composites (Figure 1, Clarke application no. 1) with high elastic capability depending on the desired final composite required performance temperature. The method discovered for filling the porosity in one operation is a thermal quench reducing the porosity from up to 20% to less than 1% in one operation.

It is the further objective of the present invention to provide elastic composites with different ceramic sealed edges by selecting different composite reinforcements for laser cutting fabrication of the preferred ceramic edge, e.g., S-glass fabric reinforced composites, when laser cut, form an aluminum oxide ceramic edge.

It is the objective of the present invention to enable the fabrication of discontinuous chopped fiber filled high temperature (up to 850°C) "liquid" gaskets that can perform up to 6,640 hours retaining 30 psi hot exhaust engine gas.

It is the further objective of the present invention to enable silicone composites in aircraft interior and exterior to be prepared as fire resistant flexible ceramic structures embedded with electric circuits to be used in passenger electronics and telecommunications equipment.

It is the further objective of the present invention to provide composites that have passed (FAR 25.853) FAA fire penetration, burn through, heat release (< 10 kW/m2), smoke density and Boeing toxicity testing per BSS 7239 with superior capability than phenolic matrix composites with higher strength retention after FAA fire penetration testing and self extinguishing performance.

### Summary of the Claims

The present invention relates to the discovery of high heat resistant elastic composite laminates, sealants, adhesives and coatings developed from the resin blend discovery cited in Clarke application no. 1. The present invention advantageously finds utility in new fire resistant elastic silicone composite materials and methods of fabrication to address the increasing demands for cost saving light weight fire resistant solutions for aircraft fire hazards.

The resin blend is made up of methyl and (optionally) phenyl silsequioxane resins selected to produce silanol-silanol condensation silicone polymers formed in a slowly evolving reaction mass containing submicron boron nitride, silica and boron oxide fillers. The required weight ratio of submicron boron nitride to silica has been discovered (10/6 to 20/6) for assuring the formation of a high temperature resistant elastic composite blend that will form intermediate flexible ceramic products up to 600°C, then continue to form preceramic then dense ceramic products upon entering the "red heat" (600 to1000°C) zone, The thermal yield of the composite is generally greater than 90 wt. % at 1000°C.

The the present invention also provides methods of cost effectively fabricating the elastic fire protective composite laminates (including honeycomb structures), sealants (including gaskets and liquid gaskets), adhesives and specialty thermo-insulating fire protective coatings also made from the resin blend.

This invention provides methyl and/or phenyl silicone affordable resin blends containing high temperature interactive submicron ceramic additives and methods of cost effective composite fabrication for producing elastic fire-protective composite aircraft interiors and exteriors. Most current organic polymers used for this purpose (Ref. 4) ignite and burn rapidly under fuel fire exposure conditions. This invention solves this flammable organic polymer matrix problem with the development of affordable silicone resin blends that enable the cost effective fabrication of fabric reinforced high temperature elastic silicone composites that are transformed into "flexible-ceramic" fire barriers when subjected to fuel fire exposure conditions. After FAA fire penetration testing these composites retain 80 to 100% of their strength and instantly self extinguish at fire contact surfaces not possible with phenolic resins or charred epoxy composites.

### BRIEF DESCRIPTION OF THE DRAWING

Fig. 1A is a fire resistant composite laminate constructed according to the principles of the present invention;
Fig. 1B shows a resin matrix of a ply of Fig. 1A; and
Fig. 1C is an enlarged detail of a boron nitride particle of Fig. 1B.

### DESCRIPTION OF THE PREFERRED EMBODIMENTS

Fire resistance testing (as specified in FAR 25.853) of the invention's composite laminates have passed FAA fire penetration testing certified by National Technical Systems (NTS) Fullerton, CA at 2000°F for 15 minutes with 80% strength retention and greater durability capability and FAA heat release (peak < 10 kW/m² and total heat release of 1.5 kW/m² with pass requirement of 65 for both heat release rates and total heat release) and with minimal smoke density fire testing and minimum Boeing BSS 7239 toxicity testing certified by TestCorp, Mission Viejo, CA.

Heat resistance cab fleet durability testing (under confidentiality agreement) of the invention's composite seals and sealants have endured over 4 years internal combustion (IC) engine pressurized severe exhaust manifold temperatures without a loss in seal performance or burn through from exhaust gas at sustained and spike temperatures approaching 1000 °C.

To accomplish the above product performance, the resin blend additive materials are selected with high flexible and thermal resistant properties. The unique resin blend is typically mixed from three silicone resins and two or more ceramic additives. To accomplish the elastic compression recovery performance (Figure 1 Clarke application no. 1) of composites made from the resin blend's "prepreg" several different composite elements are utilized, the most important being the resin blend composition and methods of processing. The resin blend is formulated from a high-molecular-weight "flake resin" and intermediate liquid silicone resin precursor and optionally a lower molecular weight silicone resin. These resins are selected to have different functionality such as listed in Table 2 of Clarke application no. 1.

A variety of polysiloxane oligomers are well known in the art that exhibit similar functionality; however, the discovery's most preferred organic groups are the methyl or phenyl because of their high thermal stability. A typical resin blend with the preferred additive systems is given in Table 3 of Clarke application no. 1 and the formulation using preferred commercially available resins is set forth in Table 4 of Clarke application no. 1.

The preferred resin blend additives are silica and boron nitride retaining 2+1.0 wt% residual boron oxide. These additives interact with the resin reaction mass producing an elastic resin blend with high thermal fire resistant capabilities.

Silica was discovered by Clarke (Ref. 7) to slow down the time it takes for the silicone resin reaction mass catalyzed by boron oxide to reach "gel" at 177°C (Table1 of Ref. 7). Using this capability, the silicone reaction mass is slowly polymerized at ambient temperature in excess acetone favoring the formation of high molecular weight silicone polymers with high elastic increased linear chain (Si-O-Si) growth. Additionally, a mixture of silica and boron nitride added to the silicone resin reaction mass produces a superior flexible elastic polymer with high-temperature elastic properties that cannot be produced using silica or boron nitride alone.

Silica alone will increase the polymer modulus causing it to become nonelastic above 300°C. Boron nitride alone at the suggested 16 wt% will produce an excessively plasticized soft low modulus weak polymer that will fail in interlaminar shear loading as a gasket. But when boron nitride and silica are in a 10/6 to 20/6 parts by weight ratio with 100 parts resin blend (Table 5 of Clarke application no. 1) the elastic polymer produced by the boron oxide processing will become a thermally stable high-temperature flexible elastic polymer up to 500°C because the silica is increasing the modulus to compensate for the plasticizing effect of the boron nitride which is thermally stable as a lubricant to 850°C (Ref. 8).

Boron nitride retaining 2.0+1.0 wt.% boron oxide is available from the Momentive Performance Materials (grade SAM-140) and ZYP Coating (grade ZPG-18 and -19) Companies who can selectively provide this preferred residual boron oxide and within the boron nitride from their commercial synthesis and leaching production operations. This aggregate boron nitride retaining 2% residual boron oxide is superior to high purity boron nitride (requiring a separate catalyst addition) in processing efficiency and cost advantage. The boron nitride containing the residual boron oxide is typically added up to 20 parts by weight for every 100 parts resin as shown in Table 3 of Clarke application no. 1. The submicron boron nitride containing residual boron oxide is then about 16 wt. % of the resin blend and silica is added at 4.8 wt. %.

Boron oxide is a multipurpose additive. The boron oxide dehydrates the silanol-silanol condensation reaction to produce elastic polymers with high thermal properties, while simultaneously, the boron nitride part of the additive reaction mixture combined with silica, enables the formation of a superior flexible elastic matrix within the reinforced polysiloxane composites which is not possible with silica alone nor boron nitride alone up to 1000°C (Clarke application no. 1). From 300 to 1000 C the burn off of the organic matter of the precursor silicone resins affords the opportunity to create new elastic composites with hybrid elastic matrices made by densification processing the 10 to 20% porosity of the high temperature cured composites with the resin blend (Figure 4 Clarke application no. 1).

When the composites are heat treated in localized regions of their structures, the heated regions become high yield (>90%) ceramic while the nonheated areas remain flexible. The pyrolyzed preceramic and ceramic regions' porosity has been filled in a rapid thermal quench with the high temperature elastic matrix impregnant and cured to the desired elastic's performance temperature. Alternatively, laser cut ceramic or refractory fiber reinforced elastic laminates produce flexible composites with ceramic sealed edges, called *Flexible Ceramics*™. Varying the ceramic fibers produces different ceramic sealed edges. The multifunctional catalyst used throughout is boron oxide which can be supplied as a residual constituent of commercial reaction produced boron nitride. This approach provides a significant cost savings in eliminating the costly leaching operations needed to remove the boron oxide.

A unique method of mixing the resin formulation has been discovered. The method incorporates the least amount of anhydrous acetone necessary to dissolve the flake resin which is typically 25 parts added to the preferred formulation (Table 4 Clarke application no. 1). The method uses additive co-mingling and acetone stripping equipment (capable of recovering the acetone) combined together to assure the initial polymerization of the resin precursors incorporates the solid submicron additives uniformly throughout as the resin blend is slowly produced at ambient temperature.

This specialized equipment assures that the boron oxide catalyst contained in the boron nitride particulate can uniformly activate the dehydration of the Si-OH groups to form long chain siloxane bonds, Si-O-Si as the acetone is stripped away. In this process, dehydration probably takes place (Ref. 10) between the Si-OH groups on the silanol-terminated polysiloxane and residual Si-OH groups on the silsequioxane polymer, leading to polycondensation and the formation of an interpenetrating network. The acetone at 16% of the mixture is removed during the mixing down to approximately 1%.

During the resin blend mixing and stripping of acetone, it is checked for the "gel" reaction time which generally ranges from 2 to 10 minutes at 177°C. Adjustments can be made by adding boron oxide or silica as required, generally this is not necessary.

The stripped resin blend impregnation of fabric or fiber structures is carried out cost effectively at ambient temperature not requiring solvents or heat. Standard metering blade "over-roll" or high speed "reverse roll" impregnating equipment are used to impregnate the fabric. The fabrics can be any of the glass (E-glass, S-glass, quartz or chemically altered variations of these), Nextel® or refractory (e.g., zirconia) high temperature fibers or advanced composite graphite or pitch fiber weaves or styles provided by the textile industry. When using graphite or pitch fabrics, electro-less metal (such as nickel or aluminum) coated fibers are preferred for producing these advance composite polysiloxane matrix composites with high performance mechanical properties. Nickel oxide activates the silicone resin blends just as aluminum oxide assuring increased bond strength.

The prepreg is processed into stacks of laminates (called "books") separated by unobvious layers of nylon fabric (e.g., style P2220 made by Cramer Fabrics, Inc.) peel ply which the inventor discovered through extensive laser testing will provide a thermo-barrier for multiple stack laser cutting. This allows multiple parts to be cut in one laser cutting operation without thermo-vaporizing the flammable top and edge of each stacked laminate at significant cost advantage.

Each ply of each prepreg layer is typically molded in a balanced architecture, e.g., 3-ply laminate for composites 1.1 mm thick are molded with a (0°, +60°,-60°) balanced architecture (Ref. 7), where the warp yarns are arbitrarily selected as the 0_{°}primary reference. A typical multiple platen stacked laminate press molding cycle consists of an ambient applied preload, followed by a 10 minute vacuum soak, followed by a 30 minute heat cycle to 95°C which is held until the loss of water from the condensation reaction is negligible, then the heat cycle is continued to 150°C where full pressure of 200 psi is applied, followed by a 190°C cure for 2 hours. The laminates are cooled down under pressure to 37°C, and then the platen pressure is reduced to preload, then ambient. After sufficient cooling, the book stacks are removed for multiple part laser cutting.

The laser cutting procedure uses a carbon dioxide laser with nitrogen purge that produces a ceramic sealed cut edge depending upon which ceramic fiber is used for the laminate reinforcement and the laser cut parts have up to 25% higher tensile strength compared to mechanically sheared parts. The following preferred carbon dioxide power settings are used to cut multiple stack laminates with up to 16,500°C focus point to vaporize the laminate's cut edge.

The typical power set up for laser cutting book stacks of multiple laminate is:
Carbon dioxide production laser cutting set up:
   Focal length 7 inches (17.78 cm)
   Beam diameter 0.6 inches (1.52 cm)
   Laser wavelength 10.6 micron
   Focal point diameter 0.124 inches (0.0315 cm)
   Laser power 3500 watt
   Laser Power/Area 4.5x 10₉ watt/m₂
   Temperature at focus 16,785 K (16,510°C)

The multiple stack laminate laser cutting is achieved for significant cost advantage by using the following unobvious materials and processes:
(1) A heat barrier nylon fabric is initially placed between laminates molded together in "book stacks"enabling the multiple laminates to be protected from interface thermovaporization.
(2) A nitrogen purge is applied to cover the cutting focus point at a 1.5mm nozzle gap expelling nitrogen gas at 142 psi from a 2mm nozzle orifice, and (3) the preferred carbon dioxide power settings (shown above) are used to cut multiple stack laminates with a up to 16,500°C focus point that vaporizes the laminate stack as it is cut, but not the laminate interface protected by the heat protected nylon fabric separator peel plies. The power set up enables book stacks of 10 to 20 laminates to be laser cut at a time with higher cutting capacity if needed.

Additionally, fast thermal quench heat treat processes are used to impregnate pyrolyzed porous polymer or ceramic products, e.g., 12% porosity can be brought to less than 1% in one operation. This same thermal quench process is used to fast impregnate braid and twisted yarn in one operation for producing fiber reinforced high temperature liquid sealants or "O" ring seals.

Ford Crown Victoria 4.6 liter V8 engine Flexible Ceramic™ (FC) and multi-layer steel (MLS) exhaust manifold gaskets were comparison tested (under confidentiality agreement) using pressure decay measured from an initial 30 psi applied pressure with the gaskets bolted between aluminum and iron sealing surfaces using standard studs and lock nuts and placed within an oven at 350°C. The pressure decay curves shown in Figure 5 of the Clarke application No. 1 reveal that FC gaskets had essentially no leakage compared to the MLS gaskets which leaked severely.

The FC exhaust gasket matrix material when used as an exhaust manifold sealant was also evaluated for a year (under confidentiality agreement) on Jasper Engine Company Generators powered with Ford 460 V8 truck engines. All engines performed without a problem for 6640 hours which is equivalent to 400,000 miles of truck engine durability. Cab fleet testing has confirmed the durability in performing over 350,000 miles in Crown Victoria 4.6 liter V8 engine exhaust manifold composite gasket testing.

Laminates have been invented using the resin blend that passed FAA fireproof testing (as specified in FAR 25.853) certified by National Testing Systems, Fullerton, CA. The laminates were invented by using inexpensive E-glass style 1583 8HS fabric reinforced resin blend impregnated prepreg. A tri-axial architecture was utilized (but is not the only architecture that could have been selected including the use of pressed molded SMC composites). A three ply compression molded laminate cured at 125°C and 200 psi pressure was vacuum press molded as a 1.1 mm thick laminate which was post cured at 200°C. The laminate was filmed throughout the testing revealing no smoke nor ignition and no change in the elastic laminate back surface appearance. When the 2000°F flame was removed from the front surface of the laminate, the fired surface immediately self extinguished with no smoke or burning revealed over the ceramic fire barrier exterior. The interior flexible ceramic middle ply had no burn through as well as the back surface which retained elastic properties with good ignition and smoke free appearance. Table 1 reveals an 80 to 100% tensile strength retention as demonstrated for the above described fire tested panel.
Comparison of Ultimate Strength (psi)
For FAA Fire Penetration Test Panels
Per ASTM D-638-3

**Table 1 Reveals a 98% average Strength Retention with 80 to 100% Strength Retention Range.**

| Before Fire Testing | | After Fire Testing |
|---|---|---|
| 8,180 | | 6,650 |
| 6,460 | | 10,440 |
| 8,880 | | 6,490 |
| 7,180 | | 5,230 |
| 9,220 | | 10.150 |
| Average | 7,980 | 7,790 |
| Standard Deviation | 1,155 | 2,352 |

The same invented laminates also passed the FAA Heat Release testing (as specified by FAR 25.853) certified by TestCorp, Mission Viejo, CA. The laminates were post cured at 200°C before testing. The laminates were invented primarily from condensation cured methyl (and optionally phenyl) silicone resins, e.g., methyl silsesquioxanes, had peak heat release rates below 10kW/m² and total heat release of 1.5 kWMin./m² with a pass requirement of 65 for both heat release rates and total heat release. This heat release rate can be further driven down as the laminate is cured at higher temperatures, since a typical TGA of the laminate (Figure 2 Clarke application no. 1) reveals a 88% yield at 1000°C and no weight loss from 700 to 1000°C. Consequently, by controlling the degree of cure the heat release can be reduced to zero if desired.

The same invented laminates also passed the FAA Smoke Density testing (as specified by FAR 25.853) certified by TestCorp, Mission Viejo, CA. The laminates were post cured at 200°C before testing.. The laminates invented chiefly from condensation cured methyl silicone resins, e.g., methyl silsesquioxanes, had a specific optical density average of 0.5 with a maximum 200 in 4 minutes allowed.

The same invented laminates also passed toxicity testing per Boeing BSS 7239 test requirements certified by TestCorp, Mission Viejo, CA. The laminates were post cured at 200°C before testing. The laminates invented primarily from condensation cured methyl and phenyl silicone resins, e.g., methyl silsesquioxanes, tested for 4 toxic gases at less than 3 with a maximum allowance of 100 to 500 with less than 8 for the fifth toxic gas. Again, an increase in cure temperature would reduce these numbers to zero.

A preliminary FAA fire blanket burn through test was performed by Mexmil Company in Irvine, California to test a light weight thin ½ mm single ply of the above laminate that has passed all the above FAA and Boeing tests. This same ply was also be tested by Flexible Ceramics Inc. with a thermo-insulation coating invented to reduce the heat transfer through the light weight thin ply. The FAA bum-through at 2000F test must not burn through in less than 4 minutes or register a heat level higher than allowed by FAA requirements when measured 4 inches back from the flame surface. The objectives of this test are to succeed with an affordable material, light weight without smoke, toxicity or heat release greater than currently demonstrated by our above inventions. Initial burn through evaluations of the sample materials had no burn through at 5.5 minutes. Certified testing is currently being undertaken.

Additional testing of the fire protective resin blend inventions have included fastener adhesives that bond stainless steel bolts at 550 to 1000°C exceeding Loctite's liquid gasket peak temperature and torque retention capabilities.

The above same laminate at the same 1.1 mm thickness has been tested for 4.5 years in Ford cab fleet testing going for over 350,000 miles (150,000 mile requirement) as exhaust manifold sealing gaskets cut at 16,500°C and sealing exhaust gas at 815°C sustained temperatures under 30 psi sustained engine exhaust gas pressure.

The capability to instantly form a ceramic protective skin was demonstrated as the above gaskets were laser cut at 16,500°C from the above elastic laminates without ignition or fire problems.

The laminates capacity to immediately self extinguish is also valued in producing ignition chamber products where this invention does not cause preignition because of its unique self extinguishing property.

The same advantage is achieved when a caulking sealant invention is used with a mixture of the resin blend and chopped cured twisted or braided E-glass yarn rods applied to an exhaust manifold eliminating the need for a gasket. This invention uses the resin blend as a liquid gasket. This invention was tested for over 6000 hours on Ford truck engines under confidentiality agreement and resulted in no failures with the exhaust gas running at 100 degrees hotter than fossil fuel fired engines approaching 1,000°C because the test was run with methane gas.

Referring now to Fig.'s 1A and 1B, there is shown an exemplary three ply composite laminate panel 10 as described above. In Fig. 1A, the laminate 10 includes a first ply 12, a second ply 14 and a third ply 16. An edge 118 is laser cut to ceramiticize the edge 18 as described above.

When used as a heat or fire resistant laminate, an upper surface 20 of the first ply 12 , has heat applied there to in normal use. For example, 2000°F fire penetration as specified in FAR 25.853 will form a ceramic fire barrier on the top surface 20. Under these conditions, the middle ply 14 will form a flexible preceramic in transition from rubber to ceramic. And the lower ply 16 will remain in an unburned elastomeric state. These conditions may be observed using 1.1mm thick composite laminate reiforced with Style 1583 8HS E-galss fabric laminated with methyl and phenyl silesquioxane resin blended with boron nitride, silica and boron oxide additives.

With reference to Fig. 1B, the resin matrix of the laminate of Fig. 1A includes a fiber reinforcement 22 and a filler system of boron nitride and silica particulate 24. The surface 26, as described above, is a methyl and/or phenyl silsesquisiloxane. In Fig. 1C., and enlarged detail of a borine nitride particle 24 shows boron oxide particles 28 therein.

There has been described herein above novel apparatus, methods, compositions of matter and techniques. Those skilled in the art may now make numerous uses of and modifications to the above described embodiments without departing from the inventive concepts described herein. Accordingly, the present invention is to be defined solely by the lawfully permitted scope of the appended Claims.

## Claims

1. A fire-resistant composite comprising:
a reinforcement material impregnated with a resin blend comprising a silicone resin in about 100 parts by weight, boron nitride in about 4 to 40 parts by weight, silica in about 3 to 15 parts by weight and boron oxide in about 0.1 to 1.2 parts by weight, that is catalyzed by the boron oxide to form a silicone reaction mass that is polymerized at ambient temperature to form a porous silicone polymer having by an elastic linear chain growth, the silica and boron nitride being added to produce a polymer with elastic properties and, a densification resin blend filing pores in the porous silicone polymer and comprising a dimethyl polymer with phenyl silsesquioxane at about 40 to 70 parts by weight and a methoxy terminated dimethyl polymer with methoxy terminated silsesquioxane and a silanol terminated polymethyl silxoane at about 10 to 60 parts by weight to which about 20 parts by weight of the boron nitride and about 6 parts by weight of the silica are added and mixed.

2. The fire-resistant composite in accordance
with claim 1 as a first ply in combination with like second and third plies forming a multiple ply fire-resistant laminate panel, an outer surface of the first ply being exposable to fire conditions during which it forms a ceramic fire barrier while the second ply forms a flexible pre-ceramic in transition from rubber to a ceramic and during which the third ply remains in an unburned elastomeric state.

3. The multiple ply fire-resistant laminate panel of claim 2 wherein the laminate panel is cured at about 125 °C and about 200 psi, vacuum press molded and post cured at about 200 °C.

4. The multiple ply fire-resistant laminate panel of claim 2 wherein in at least one ply of the laminate panel includes at least one fiber reinforcement.

5. The multiple ply fire-resistant laminate panel of claim 2 wherein at least one ply of the laminate panel includes a filler system of boron nitride and silica particulate.

6. The multiple ply fire-resistant laminate panel of claim 5 wherein the boron nitride particulate includes boron oxide particles.
